# EUROPÄISCHE PATENTSCHRIFT

(11) **EP 2 838 766 B1**
(45) Veröffentlichungstag und Bekanntmachung des Hinweises auf die Patenterteilung: **18.08.2021**
(21) Anmeldenummer: 13714930.8
(22) Anmeldetag: 09.04.2013
(51) Int. Cl.: B60S 1/38

(54) **WISCHBLATTVORRICHTUNG**
WIPER BLADE DEVICE
DISPOSITIF BALAI D'ESSUIE-GLACE

(30) Priorität: 19.04.2012 DE 102012206423
(43) Veröffentlichungstag der Anmeldung: 25.02.2015
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2013/057349
(87) Internationale Veröffentlichungsnummer: WO 2013/156340

(56) Entgegenhaltungen:
- EP-A1- 2 020 351
- DE-A1-102009 014 700
- FR-A1- 2 879 986
- FR-A1- 2 916 715
- FR-A1- 2 924 080
- US-A1- 2007 094 833
- US-A1- 2008 163 448
- None

## Beschreibung

### Stand der Technik

Es sind bereits Wischblattvorrichtungen mit einer Basiseinheit und einer mit einem Wischarm verbindbaren Adaptereinheit, welche in wenigstens einem montierten Zustand formschlüssig an der Basiseinheit fixiert ist, bekannt. Eine Wischblattvorrichtung mit den Merkmalen des Oberbegriffs ist beispielsweise aus der FR 2 879 986 A1 bekannt.

### Offenbarung der Erfindung

Es wird eine Wischblattvorrichtung mit einer Basiseinheit und einer mit einem Wischarm verbindbaren Adaptereinheit, welche in wenigstens einem montierten Zustand formschlüssig an der Basiseinheit fixiert ist, wobei die Basiseinheit und die Adaptereinheit in dem montierten Zustand eine Formschlussverbindung aufweisen, in der zumindest eine der Einheiten die andere der Einheiten zumindest teilweise formschlüssig umgreift, vorgeschlagen. Unter einer "Basiseinheit" soll in diesem Zusammenhang insbesondere eine Einheit verstanden werden, weiche ein Fundament für die Adaptereinheit bereitstellt und welche insbesondere in wenigstens einem montierten Zustand an einer Federleiste eines Wischblatts befestigt ist. Unter einer "Federleiste" soll in diesem Zusammenhang insbesondere ein Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise besteht die Federleiste teilweise, vorzugsweise zumindest zu einem Großteil und besonders vorteilhaft vollständig aus Federstahl. Darunter, dass die Federleiste "zumindest zu einem Großteil" aus Federstahl besteht, soll insbesondere verstanden werden, dass die Federleiste mit einem Massenanteil von zumindest 50 %, insbesondere von wenigstens 70 %, vorzugsweise von mindestens 90 % und besonders vorteilhaft von zumindest 95 % aus Federstahl besteht. Vorzugsweise ist die Basiseinheit einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und besonders vorteilhaft aus einem einzelnen Rohling. Unter einer "Adaptereinheit" soll in diesem Zusammenhang insbesondere eine Einheit verstanden werden, welche einen Kontaktbereich zu einem Wischblattbauteil, insbesondere der Basiseinheit, aufweist, insbesondere in wenigstens einem montierten Zustand mit dem Wischblattbauteil unverlierbar verbunden und dazu vorgesehen ist, einen Kopplungsbereich eines Wischblatts für eine Kopplung und/oder Kontaktierung mit dem Wischarm, insbesondere einem Wischarmadapter des Wischarms, bereitzustellen. Unter "vorgesehen" soll insbesondere speziell ausgelegt und/oder ausgestattet verstanden werden. Vorzugsweise ist die Adaptereinheit mit dem Wischarm, insbesondere dem Wischarmadapter des Wischarms, drehbar verbunden, insbesondere auch mittelbar über wenigstens ein Lagerelement. Vorzugsweise bestehen die Basiseinheit und/oder die Adaptereinheit zumindest im Wesentlichen aus Kunststoff, sie können jedoch auch grundsätzlich aus einem Metall oder einem anderen, einem Fachmann als geeignet erscheinenden Material hergestellt sein. Darunter, dass die Basiseinheit und/oder die Adaptereinheit "zumindest im Wesentlichen aus Kunststoff bestehen", soll insbesondere verstanden werden, dass die Basiseinheit und/oder die Adaptereinheit mit einem Massenanteil von wenigstens 60 %, insbesondere von zumindest 70 %, vorzugsweise von mindestens 80 % und besonders vorteilhaft von wenigstens 90 % aus Kunststoff bestehen. Vorzugsweise ist die Adaptereinheit einstückig ausgebildet, grundsätzlich kann die Adaptereinheit jedoch auch aus mehreren, separat gefertigten und miteinander verbundenen Einzelteilen hergestellt sein. Unter "formschlüssig" soll insbesondere verstanden werden, dass die Basiseinheit und die Adaptereinheit zumindest ein Paar von aneinander anliegenden Flächen aufweisen, die eine in Normalenrichtung der Flächen wirkende Haltekraft aufeinander ausüben. Insbesondere befinden sich die Basiseinheit und die Adaptereinheit bei einer formschlüssigen Befestigung aneinander in einem geometrischen Eingriff miteinander. Unter "einander zumindest teilweise umgreifen" soll insbesondere verstanden werden, dass zumindest ein Teilbereich der Basiseinheit oder der Adaptereinheit an zumindest zwei Seiten von anliegenden Teilbereichen der Adaptereinheit oder der Basiseinheit bedeckt ist. Vorzugsweise umgreift eine der Einheiten die andere Einheit von oben, worunter verstanden werden soll, dass die eine Einheit zumindest eine Teilfläche der anderen Einheit an einer von einer Oberfläche eines Wischblatt abgewandten Seite der anderen Einheit bedeckt. Es kann insbesondere eine einfach auszuführende und sichere Befestigung eines Wischarms an einem Wischblatt erreicht werden.

Ferner wird vorgeschlagen, dass die Adaptereinheit ein Formschlusselement aufweist, das in dem montierten Zustand von der Basiseinheit zumindest teilweise umgriffen wird. Unter einem "Formschlusselement" soll insbesondere ein besonders zu einem Eingriff mit einem anderen Element vorgesehenes Element der Adaptereinheit verstanden werden. Vorzugsweise ist das Formschlusselement als ein Vorsprung der Adaptereinheit ausgebildet. Es kann insbesondere eine einfach auszuführende Befestigung der Adaptereinheit an der Basiseinheit erreicht werden.

Ferner wird vorgeschlagen, dass das Formschlusselement der Adaptereinheit zumindest teilweise abgerundet gestaltet ist. Unter "zumindest teilweise abgerundet gestaltet" soll insbesondere verstanden werden, dass das Formschlusselement zumindest einen Teilbereich mit Außenflächen aufweist, der abgerundet gestaltet ist. Vorzugsweise ragt das zumindest teilweise abgerundet gestaltete Formschlusselement über andere Teilbereiche der Adaptereinheit hervor. Insbesondere kann das teilweise abgerundet gestaltete Formschlusselement einen halbkreisförmigen Querschnitt aufweisen. Weiterhin ist der abgerundet gestaltete Teilbereich vorzugsweise gewölbt ausgebildet. Es kann insbesondere eine einfach zu befestigende Adaptereinheit erreicht werden.

Ferner wird vorgeschlagen, dass die Basiseinheit zumindest ein Rastelement aufweist, das dazu vorgesehen ist, die Adaptereinheit mittels einer Rastverbindung zu fixieren. Unter einem "Rastelement" soll in diesem Zusammenhang insbesondere ein Element zur Herstellung einer Rastverbindung verstanden werden, das vorzugsweise dazu vorgesehen ist, bei einer Montage elastisch ausgelenkt zu werden. Es kann insbesondere eine einfach bedienbare und sichere Befestigung erreicht werden.

Ferner wird vorgeschlagen, dass die Adaptereinheit zumindest einen abgerundeten Pin aufweist, der zur Anlage eines Rastelements vorgesehen ist. Unter einem "abgerundeten Pin" soll insbesondere ein stiftförmiges Element verstanden werden, das zumindest eine Gestaltung mit einem eckigen Querschnitt, der abgerundeten Kanten aufweist oder vorzugsweise einen kreisförmigen Querschnitt aufweist. Es kann insbesondere eine einfache Rastbefestigung der Adaptereinheit erreicht werden.

Ferner wird vorgeschlagen, dass das Rastelement von einem Rasthaken gebildet ist. Unter einem "Rasthaken" soll insbesondere ein hakenförmiges Element verstanden werden, das dazu vorgesehen ist, eine Rastverbindung zu bewirken. Unter einem "hakenförmigen" Element soll insbesondere ein Element verstanden werden, dass eine Ausnehmung zur Anlage eines Anlageelements aufweist, die in zumindest einer Richtung auf mehr als 180 Grad von Wänden des hakenförmigen Elements begrenzt wird. Vorzugsweise ist die Ausnehmung geschwungen ausgebildet, grundsätzlich kann sie jedoch auch eckig ausgebildet sein, beispielsweise durch ein Polygonprofil. Es kann insbesondere ein einfach herstellbares Rastelement der Basiseinheit erreicht werden.

Ferner wird vorgeschlagen, dass der Rasthaken drehbar gelagert ist. Eine drehbare Lagerung könnte beispielsweise durch Montage des Rasthakens an einer drehbar gelagerten Stange erreicht werden, grundsätzlich sind jedoch auch andere, dem Fachmann als geeignet erscheinende drehbare Lagerungen möglich. Es kann insbesondere konstruktiv einfach eine unkompliziert erreichbare Rastbefestigung und eine einfache Lösbarkeit der Rastbefestigung erreicht werden.

Ferner wird vorgeschlagen, dass der Rasthaken durch ein elastisches Element in einem geschlossenen Zustand gehalten wird. Unter einem "elastischen Element" soll insbesondere ein Element verstanden werden, das wiederholt elastisch verformbar und/oder auslenkbar ist, ohne dass dadurch das Element mechanisch beschädigt oder zerstört wird, und das insbesondere nach einer Verformung und/oder Auslenkung selbstständig wieder einer Grundform und/oder Grundorientierung zustrebt. Es kann insbesondere eine sichere Rastverbindung und eine feste Fixierung der Adaptereinheit in der Basiseinheit erreicht werden.

Ferner wird vorgeschlagen, dass das Rastelement elastisch verformbar ausgebildet ist. Unter einem "elastisch verformbaren" Element soll insbesondere ein Element verstanden werden, das wiederholt verformbar ist, ohne dass dadurch das Element mechanisch beschädigt oder zerstört wird, und das insbesondere nach einer Verformung selbstständig wieder einer Grundform zustrebt. Insbesondere ist das elastisch verformbare Element aufgrund einer elastischen Verformung elastisch auslenkbar, worunter verstanden werden soll, dass durch Einwirken einer äußeren Kraft es eine äußere Form zumindest im Wesentlichen beibehält, jedoch in einer Position bezüglich weiterer Elemente verschoben wird. Es kann insbesondere ein konstruktiv einfaches Rastelement erreicht werden.

Ferner wird vorgeschlagen, dass das Rastelement keilförmig ausgebildet ist. Unter "keilförmig" soll insbesondere ein Rastelement mit einer Grundform verstanden werden, bei der zumindest zwei Seiten unter einem Winkel der kleiner als ein rechter Winkel ist, zusammenlaufen. Vorzugsweise laufen die zwei Seiten unter einem Winkel von 45 Grad zusammen. Es kann insbesondere ein Rastelement mit einer einfachen Gestaltung erreicht werden.

Ferner wird vorgeschlagen, dass die Adaptereinheit zumindest ein Klappelement aufweist, das zu einer Befestigung eines Wischarms an der Adaptereinheit vorgesehen ist. Unter einem "Klappelement" soll insbesondere ein Element verstanden werden, das dazu vorgesehen ist, um eine feststehende Achse geschwenkt zu werden. Es kann insbesondere ein einfach bedienbares Befestigungselement zu einer Befestigung eines Wischarms erreicht werden.

Ferner wird ein Orientierungselement vorgeschlagen. Unter einem "Orientierungselement" soll insbesondere ein Element verstanden werden, dass dazu vorgesehen ist, einem Benutzer einen Hinweis auf eine Orientierung der Basiseinheit und der Adaptereinheit zueinander während einer Montage zu geben. Es kann insbesondere eine geringe Wahrscheinlichkeit einer Falschmontage erreicht werden.

Ferner wird vorgeschlagen, dass das Orientierungselement als visuelles Hinweiselement ausgebildet ist. Unter einem "visuellen Hinweiselement" soll insbesondere ein Element verstanden werden, das dazu vorgesehen ist, einem Benutzer auf einem optischen Weg einen Hinweis zu geben und das keine sonstige Funktion, beispielsweise zur Herstellung einer Verbindung, erfüllt. Insbesondere kann das visuelle Hinweiselement als eine dekorative Ausnehmung, vorzugsweise als eine Öse, ausgestaltet sein, oder als ein Hinweisschild mit einer Zeichnung und/oder Beschriftung. Es kann somit insbesondere eine geringe Wahrscheinlichkeit einer Falschmontage erreicht werden.

Ferner wird vorgeschlagen, dass das Orientierungselement als Formschlusselement der Basiseinheit und/oder der Adaptereinheit ausgebildet ist. Es kann insbesondere über eine Verlaufsrichtung des Formschlusselements ein Hinweis auf die Orientierung der Basiseinheit und der Adaptereinheit zueinander während der Montage gegeben werden. Ist das Formschlusselement zumindest teilweise rund ausgebildet, so kann über eine Verlaufsrichtung einer Rundung der Hinweis auf die Orientierung gegeben werden. Es kann insbesondere eine Funktionsintegration von Befestigungselementen mit einer zusätzlichen Funktion und eine geringe Wahrscheinlichkeit einer Falschmontage erreicht werden.

Ferner wird vorgeschlagen, dass die Basiseinheit einen von zumindest zwei Wänden begrenzten Aufnahmebereich für die Adaptereinheit aufweist. Vorzugsweise ist der Aufnahmebereich auf zumindest 3 Seiten von Wänden begrenzt. Insbesondere kann eine der Wände eine auf dem Wischblatt aufliegende Grundfläche der Basiseinheit bilden. Es kann insbesondere eine feste und gegen eine Verrutschung gesicherte Verbindung der Basiseinheit und der Adaptereinheit erreicht werden.

Ferner wird vorgeschlagen, dass an zumindest einer den Aufnahmebereich begrenzenden Wand zumindest ein Vorsprung angeordnet ist, der mit der Wand eine Formschlussausnehmung zur Anlage des Formschlusselements der Adaptereinheit bildet. Unter einem "Vorsprung" soll insbesondere ein an einem ersten Element angeordnetes zweites Element verstanden werden, das seitlich an dem ersten Element angeordnet ist und dessen Projektion auf eine Standfläche, auf der das erste Element angeordnet ist, zumindest teilweise überschneidungsfrei mit einer Projektion des ersten Elements auf die Standfläche ist. Unter einer "Formschlussausnehmung" soll insbesondere ein an zumindest zwei Seiten durch Wände begrenzter Bereich verstanden werden, der zur Anlage eines zu einer Form des Bereichs korrespondierenden Formschlusselements vorgesehen ist. Insbesondere bildet eine Formschlussausnehmung ein Formschlusselement. Es kann insbesondere eine konstruktiv einfache, sichere formschlüssige Befestigung der Adaptereinheit an der Basiseinheit erreicht werden.

Ferner wird vorgeschlagen, dass die Formschlussausnehmung zumindest teilweise einen abgerundeten Verlauf aufweist. Unter einem "zumindest teilweise abgerundeten Verlauf" soll insbesondere ein Verlauf zwischen zumindest zwei die Formschlussausnehmung begrenzenden und aneinander angrenzenden Wänden verstanden werden, der frei von scharfen Kanten ist. Es kann insbesondere ein vorteilhafter Formschluss erreicht werden.

Ferner wird vorgeschlagen, dass das Rastelement an einer der Formschlussausnehmung gegenüberliegenden Seite des Aufnahmebereichs angeordnet ist. Es kann insbesondere eine einfach auszuführende Montage in einem Aufnahmebereich erreicht werden.

Ferner wird vorgeschlagen, dass das Rastelement an einer Seite des Aufnahmebereichs angeordnet ist, die von einer die Formschlussausnehmung aufweisenden und der der Formschlussausnehmung gegenüberliegenden Seite verschieden ist. Es kann insbesondere eine vorteilhaft kompakte Wischblattvorrichtung mit einer geringen Längsausdehnung erreicht werden.

Ferner wird vorgeschlagen, dass das Rastelement dazu vorgesehen ist, die Adaptereinheit mit einer senkrecht zu einer Haupterstreckungsrichtung der Adaptereinheit verlaufenden Rastbewegung in einer Ebene parallel zu einer Wischebene zu fixieren. Es kann insbesondere eine einfach auszuführende Fixierungsbewegung erreicht werden.

Ferner wird ein Verfahren zur Montage einer Basiseinheit und einer Adaptereinheit vorgeschlagen, bei dem in einem ersten Schritt ein Formschlusselement der Adaptereinheit in eine Formschlussausnehmung der Basiseinheit eingesetzt wird und in einem weiteren Schritt die Adaptereinheit mittels einer Rastverbindung an der Basiseinheit fixiert wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

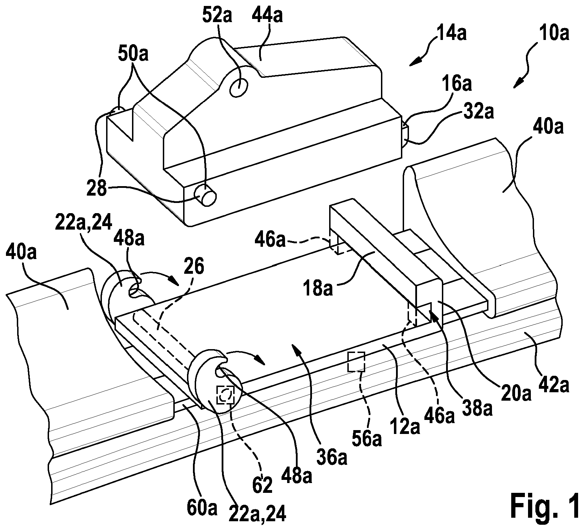

- Fig. 1: ein erstes Ausführungsbeispiel der erfindungsgemäßen Wischblattvorrichtung mit einer Basiseinheit und einer mit einem Wischarm verbindbaren Adaptereinheit, bei dem die Adaptereinheit mittels Rasthaken und abgerundeten Pins an der Basiseinheit befestigt wird.

Beschreibung des Ausführungsbeispiels:
Figur 1 zeigt ein erstes Ausführungsbeispiel einer Wischblattvorrichtung 10a mit einer Basiseinheit 12a und einer mit einem Wischarm verbindbaren Adaptereinheit 14a, welche in wenigstens einem montierten Zustand formschlüssig an der Basiseinheit 12a fixiert ist, wobei die Basiseinheit 12a und die Adaptereinheit 14a in dem montierten Zustand eine Formschlussverbindung aufweisen, in der zumindest eine der Einheiten die andere der Einheiten zumindest teilweise formschlüssig umgreift. Die Basiseinheit 12a ist auf einem Wischblatt 42a montiert, das einen Wischgummi und eine als Federschiene 60a ausgebildete Federleiste zur Vorspannung des Wischgummis umfasst. Mittels des Wischgummis wird eine nicht dargestellte Scheibe eines Fahrzeugs gereinigt, indem mittels des nicht dargestellten Wischarms das Wischblatt 42a über die Scheibe bewegt wird. Eine Ebene, die von einer Unterseite des Wischblatts 42a definiert wird und die auf der Scheibe aufliegt, wird als Wischebene bezeichnet. Zu einer Montage der Basiseinheit 12a an dem Wischblatt 42a weist die Basiseinheit 12a an einer in dem montierten Zustand unten liegenden Seite, die dem Wischblatt 42a zugewandt ist, Befestigungselemente auf, die als Greifkrallen 56a ausgeführt sind und die Federschiene 60a des Wischblatts 42a umgreifen. Die Federschiene 60a ist aus Metall hergestellt. Alternativ kann die Basiseinheit 12a an dem Wischblatt 42a auch auf andere Weise, beispielsweise durch Schweißen oder Kleben, montiert sein.

An dem Wischblatt 42a ist ferner ein als abschüssig ausgebildetes Wandelement ausgebildeter Wischspoiler 40a angebracht, welcher dazu vorgesehen ist, ein Überspülen des Wischblattes 42a mit Wischflüssigkeit zu verhindern und somit insbesondere eine Entfernung der Wischflüssigkeit von der Scheibe während eines Wischvorgangs sicherzustellen. Der Wischspoiler 40a ist von einem in Längserstreckungsrichtung des Wischblatts 42a verlaufenden Wandelement mit einem einer Wischblatthauptanströmungsrichtung zugewandten Hangbereich ausgebildet. Der Hangbereich verläuft, in einer Querrichtung des Wischblatts 42a betrachtet, asymmetrisch. Auf einer der Wischblatthauptanströmungsrichtung zugewandten Seite ist der Hangbereich des Wischspoilers 40a mit einem anfangs flachen Teilbereich und einem sich daran anschliessenden Teilbereich mit stetig sich vergrößernder Steigung ausgebildet. Der Teilbereich mit stetig sich vergrößernder Steigung läuft in einem Kamm aus, welcher eine höchste Erhebung des Wischspoilers 40a über das Wischblatt 42a definiert. Der Wischspoiler 40a ist auf einer von der Wischblatthauptanströmungsrichtung abgewandten Seite von einem im rechten Winkel zu der Wischebene des Wischblatts 42a verlaufenden, als Steilhang ausgebildet. In dem Wischspoiler 40a ist eine Ausnehmung ausgebildet, in welchem die Basiseinheit 12a auf dem Wischblatt 42a montiert ist, so dass sich der Wischspoiler 40a entlang der Längsrichtung des Wischblatts 42a zu beiden Seiten der Basiseinheit 12a erstreckt. Es können ferner nicht dargestellte Bauteile zu einer Anordnung zwischen dem Wischspoiler 40a und der Wischblattvorrichtung 10a vorgesehen sein, die ein Durchtreten von Wischflüssigkeit in einem Zwischenraum zwischen Wischblattvorrichtung 10a und Wischspoiler 40a begrenzen oder verhindern.

Die Adaptereinheit 14a weist eine im Wesentlichen quaderförmige Grundform mit einer Grundfläche, die als gleichschenkliges und symmetrisches Trapez gestaltet ist, auf, wobei auf der Grundfläche in einem mittleren Bereich ein Ankoppelelement 44a für den Wischarm angeordnet ist. Das Ankoppelelement 44a ist als ein quaderförmiges Element mit einer keilförmigen Erhebung mit einer rechteckigen Grundfläche ausgebildet, das sich in dem mittleren Bereich entlang einer gesamten Längserstreckung der Adaptereinheit 14a erstreckt. Die keilförmige Erhebung weist eine Kuppel auf, in der ein als kreisförmiges Loch ausgebildete Befestigungsmittelaufnahme 52a angeordnet ist. Die Befestigungsmittelaufnahme 52a ist zu einer Aufnahme eines entsprechend ausgebildeten Befestigungsmittels des Wischarms ausgebildet. Grundsätzlich sind auch anders gestaltete Befestigungsmittelaufnahmen 52a vorstellbar.

Die Adaptereinheit 14a umfasst das Formschlusselement 16a, das in dem montierten Zustand von der Basiseinheit 12a umgriffen wird. Das Formschlusselement 16a ist an einer kurzen Seite der Adaptereinheit 14a, wobei die kurze Seite verjüngt gegenüber der anderen kurzen Seite ausgebildet ist, angeordnet und als eine vorspringende Kante mit einer rechteckigen Grundform ausgebildet. In dem gezeigten Ausführungsbeispiel weist das Formschlusselement 16a in einem montierten Zustand oben liegende rechtwinklige Kantenbereiche und unten liegenden abgerundete Kantenbereiche auf. Die unten liegenden Kantenbereiche sind abgerundet gestaltet, um eine Montage der Adaptereinheit 14a in der Basiseinheit 12a zu erleichtern. Grundsätzlich können die Kantenbereiche jedoch auch vollständig rechtwinklig gestaltet werden und/oder das Formschlusselement 16a eine andere Grundform, beispielsweise eine dreieckige Grundform, aufweisen. Das Formschlusselement 16a ist zu einer Aufnahme in eine Formschlussausnehmung 38a der Basiseinheit 12a vorgesehen, wobei eine Form der Formschlussausnehmung 38a mit einer Form des Formschlusselements 16a korrespondiert. Aufgrund einer Korrespondenz der Formen von Formschlusselement 16a und Formschlussausnehmung 38a gibt das Formschlusselement 16a einen Hinweis auf eine Orientierung der Adaptereinheit 14a zu einer korrekten Montage der Adaptereinheit 14a in der Basiseinheit 12a und bildet somit ein Orientierungselement 32a der Wischblattvorrichtung 10a. Die Adaptereinheit 14a weist zwei abgerundete Pins 28 auf, die zur Anlage eines Rastelements 22a der Basiseinheit 12a vorgesehen sind. Die Pins 28 sind an einer dem Formschlusselement 16a gegenüberliegenden Seite der Adaptereinheit 14a angeordnet und von vorstehenden kreiszylindrischen Stabelementen gebildet. Jeweils einer der Pins 28 ist dabei an einer langen Seite der Adaptereinheit 14a angeordnet, wobei sich die Pins 28 jeweils gegenüberliegen und die lange Seite der Adaptereinheit 14a seitlich überstehen. Eine Mantelfläche der Pins 28 dient jeweils als Rastanlagefläche 50a für die Anlage der Rastelemente 22a.

Die Basiseinheit 12a weist eine rechteckige Grundfläche auf, wobei eine Länge von langen und kurzen Seiten der Grundfläche jeweils größer ist als eine Länge jeweiliger korrespondierender langer und kurzer Seiten der Adaptereinheit 14a. Die Basiseinheit 12a weist einen von einer Wand 20a begrenzten Aufnahmebereich 36a für die Adaptereinheit 14a auf, der ferner durch die Grundfläche der Basiseinheit 12a begrenzt wird. Die den Aufnahmebereich 36a begrenzende Wand 20a ist an einer kurzen Seite der Grundfläche angeordnet. An der den Aufnahmebereich 36a begrenzenden Wand 20a ist ferner in einem oberen Bereich ein sich in Richtung des Aufnahmebereichs 36a erstreckender Vorsprung 18a angeordnet, der mit der Wand 20a die Formschlussausnehmung 38a zur Anlage des Formschlusselements 16a der Adaptereinheit 14a bildet. Die den Aufnahmebereich 36a begrenzende Wand 20a weist ferner Seitenwände 46a auf, die sich an Seiten der Wand 20a, die an den langen Seiten der Basiseinheit 12a angeordnet sind, von dem Vorsprung 18a in einer Richtung parallel zu der Wischebene auf das Wischblatt 42a zu bis zu der langen Seite der Basiseinheit 12a erstrecken. Die Seitenwände 46a sind dünn gegenüber einer Dicke der Wand 20a ausgeführt und weisen lediglich eine Stärke auf, die ein Viertel der Dicke der Wand 20a beträgt. Grundsätzlich können die Seitenwände 46a jedoch auch davon abweichende Stärken aufweisen und beispielsweise genauso stark ausgeführt sein wie die Wand 20a. Die Seitenwände 46a sind dazu vorgesehen, ein seitliches Verrutschen der in der Basiseinheit 12a montierten Adaptereinheit 14a, insbesondere aufgrund einer Wischbewegung, in einem montierten Zustand zu verhindern. Die Wand 20a sowie die Seitenwände 46a sind einstückig mit der Grundfläche der Basiseinheit 12a ausgebildet. In dem gezeigten Beispiel weist die Basiseinheit 12a die ein seitliches Verrutschen verhindernden Seitenwände 46a auf, grundsätzlich können jedoch die Seitenwände 46a an der Adaptereinheit 14a angeformt sein, und sich seitlich am Formschlusselement 16a der Adaptereinheit 14a erstrecken, wobei in einem solchen Fall zur Erreichung einer formschlüssigen Befestigung eine Länge der kurzen Seiten der Basiseinheit 12a geringer ausgebildet ist, als eine Länge der kurzen Seite der Adaptereinheit 14a.

Die Basiseinheit 12a weist Rastelemente 22a auf, die dazu vorgesehen sind, die Adaptereinheit 14a mittels einer Rastverbindung zu fixieren. Die Rastelemente 22a sind von Rasthaken 24 gebildet und an einer der Formschlussausnehmung 38a gegenüberliegenden Seite des Aufnahmebereichs 36a angeordnet. Die Rasthaken 24 sind drehbar gelagert und werden durch ein elastisches Element 26 in einem geschlossenen Zustand gehalten. Das elastische Element 26 ist von einer Stange gebildet. Grundsätzlich kann das elastische Element 26 jedoch auch von einem anderen einem Fachmann als geeignet erscheinenden Element gebildet sein oder ein nicht-elastisches Element zu einer Haltung der Rastelemente 22a in einer Schließposition gebildet sein. Das elastische Element 26 wird mittels einer nur symbolisch dargestellten Fixiereinheit 62, die beispielsweise als ein federvorgespanntes Rastmittel ausgebildet ist, das nach einer Drehung der Rasthaken 24 in die Schließposition in einem dafür vorgesehenen Aufnahmeloch verrastet. Durch die Fixiereinheit 62 wird eine Festhaltung des elastischen Elements 26 in einer Schließposition erreicht. Eine Lösung der Rastelemente 22a aus der Schließposition wird mittels einer nicht dargestellten Löseeinheit erreicht, so dass eine Entnahme der Adaptereinheit 14a aus der Basiseinheit 12a möglich ist. Die Löseeinheit kann beispielsweise dazu ausgebildet sein, das federvorgespannte Rastmittel zurückzuziehen. Die Stange erreicht ferner eine drehbare Lagerung der Rasthaken 24.

Eine Fixierung der Adaptereinheit 14a durch die als Rasthaken 24 ausgebildeten Rastelemente 22a der Basiseinheit 12a wird durch eine Anlage der Rasthaken 24 an den abgerundeten Pins 28 der Adaptereinheit 14a erreicht. Die Rasthaken 24 weisen einen im Wesentlichen kreisförmigen Hauptkörper auf, mit dem sie an der drehbar gelagerten Stange, die als elastisches Element 26 ausgebildet ist, befestigt sind. Von dem Hauptkörper der Rasthaken 24 steht ein gekrümmter Sporn ab, dessen dem Hauptkörper zugewandter Krümmungsbereich eine Rastfläche 48a bildet. Die Rastfläche 48a weist einen Verlauf auf, der einem Verlauf eines Viertelkreises entspricht. Die Rasthaken 24 sind an seitlichen Endbereichen der der Formschlussausnehmung 38a gegenüberliegenden Seite des Aufnahmebereichs 36a angeordnet und liegen in einem montierten Zustand der Adaptereinheit 14a an langen Seiten des Grundkörpers der Adaptereinheit 14a an. Grundsätzlich ist es in einer alternativen Ausgestaltung vorstellbar, dass die als Rasthaken 24 ausgebildeten Rastelemente 22a an einer Seite des Aufnahmebereichs 36a angeordnet sind, der von einer die Formschlussausnehmung 38a aufweisenden Seite und der der Formschlussausnehmung 38a gegenüberliegenden Seite des Aufnahmebereichs 36a verschieden ist, beispielsweise an einer oder an beiden langen Seiten der Basiseinheit 12a. Die Adaptereinheit 14a könnte in dieser alternativen Ausgestaltung beispielsweise an den langen Seiten des Grundkörpers abgerundet ausgestaltete Ausnehmungen aufweisen, die zu einer Anlage der als Rasthaken 24 ausgebildeten Rastelemente 22a vorgesehen sind.

Zu einer Montage der Basiseinheit 12a und der Adaptereinheit 14a wird ein Verfahren angewandt, bei dem in einem ersten Verfahrensschritt das Formschlusselement 16a der Adaptereinheit 14a in die Formschlussausnehmung 38a der Basiseinheit 12a eingesetzt wird. Da nur eine der kurzen Seiten der Adaptereinheit 14a ein Formschlusselement 16a aufweist, ist eine Orientierung der Adaptereinheit 14a während der Montage durch das als Orientierungselement 32a fungierende Formschlusselement 16a vorgegeben. Durch Einsetzung des Formschlusselements 16a der Adaptereinheit 14a in die Formschlussausnehmung 38a der Basiseinheit 12a wird eine Formschlussverbindung von Basiseinheit 12a und Adaptereinheit 14a erreicht, in der die Basiseinheit 12a die Adaptereinheit 14a teilweise formschlüssig umgreift. Aufgrund der abgerundeten Gestaltung des unteren Bereichs des Formschlusselements 16a ist eine Einsetzung der Adaptereinheit 14a in die Basiseinheit 12a erleichtert zu bewerkstelligen. In einem weiteren Verfahrensschritt wird nach Einsetzung des Formschlusselements 16a in die Formschlussausnehmung 38a die Adaptereinheit 14a mittels einer Rastverbindung formschlüssig an der Basiseinheit 12a fixiert. Hierzu werden die Rasthaken 24 von Hand gedreht, so dass eine Hakenausnehmung der Rasthaken 24 die abgerundeten Pins 28 der langen Seiten der Adaptereinheit 14a umgreifen, wobei die Rastflächen 48a der Rasthaken 24 an den die Rastanlageflächen 50a bildenden Mantelflächen der abgerundeten Pins 28 anliegen. Alternativ kann das elastische Element 26 als Torsionsstange ausgebildet und bei einem Einsetzen der Adaptereinheit 14a in die Basiseinheit 12a die Rasthaken 24 durch einen Schlag von oben in eine von dem Aufnahmebereich 36a abgewandte Richtung rotatorisch ausgelenkt werden. Durch eine Auslenkung in die von dem Aufnahmebereich 36a abgewandte Richtung wird das als Torsionsstange ausgebildete elastische Element 26 verdreht, wodurch eine elastische Torsionskraft erzeugt wird, die die Rasthaken 24 in eine dem Aufnahmebereich 36a zugewandte Richtung rotatorisch auslenkt und die Rasthaken 24 in Anlage mit den abgerundeten Pins 28 der Adaptereinheit 14a bringt.

## Patentansprüche

1. Wischblattvorrichtung mit einer Basiseinheit (12a) und einer mit einem Wischarm verbindbaren Adaptereinheit (14a), welche in wenigstens einem montierten Zustand formschlüssig an der Basiseinheit (12a) fixiert ist, wobei die Basiseinheit (12a) und die Adaptereinheit (14a) in dem montierten Zustand eine Formschlussverbindung aufweisen, in der zumindest eine der Einheiten die andere der Einheiten zumindest teilweise formschlüssig umgreift, und wobei die Basiseinheit (12a) zumindest ein Rastelement (22a) aufweist, das dazu vorgesehen ist, die Adaptereinheit (14a) mittels einer Rastverbindung zu fixieren, wobei das Rastelement (22a) von einem Rasthaken (24) gebildet ist, **dadurch gekennzeichnet, dass** der Rasthaken (24) drehbar gelagert ist, wobei der Rasthaken (24) durch ein elastisches Element (26) in einem geschlossenen Zustand gehalten wird.

2. Wischblattvorrichtung nach Anspruch 1, **dadurch gekennzeichnet, dass** die Adaptereinheit (14a) zumindest ein Formschlusselement (16a) aufweist, das in dem montierten Zustand von der Basiseinheit (12a) zumindest teilweise umgriffen wird.

3. Wischblattvorrichtung nach Anspruch 2, **dadurch gekennzeichnet, dass** das Formschlusselement (16a) der Adaptereinheit (14a) zumindest teilweise abgerundet gestaltet ist.

4. Wischblattvorrichtung nach einem der vorhergehenden Ansprüche,
**dadurch gekennzeichnet, dass** die Adaptereinheit (14a) zumindest einen abgerundeten Pin (28) aufweist, der zur Anlage des Rastelements (22a) vorgesehen ist.

5. Wischblattvorrichtung nach einem der vorhergehenden Ansprüche,
**dadurch gekennzeichnet, dass** das Rastelement (22a) elastisch verformbar ausgebildet ist.

6. Wischblattvorrichtung zumindest nach Anspruch 1, **gekennzeichnet durch** zumindest ein Orientierungselement (32a).

7. Wischblattvorrichtung zumindest nach Anspruch 6, **dadurch gekennzeichnet, dass** das Orientierungselement (32a) als Formschlusselement (16a) der Basiseinheit (12a) und/oder der Adaptereinheit (14a) ausgebildet ist.

8. Wischblattvorrichtung zumindest nach Anspruch 1, **dadurch gekennzeichnet, dass** die Basiseinheit (12a) einen von zumindest einer Wand (20a) begrenzten Aufnahmebereich (36a - b, 36d - f) für die Adaptereinheit (14a) aufweist.

9. Wischblattvorrichtung zumindest nach den Ansprüchen 2 und 8,
**dadurch gekennzeichnet, dass** an zumindest einer den Aufnahmebereich (36a) begrenzenden Wand (20a) zumindest ein Vorsprung (18a) angeordnet ist, der mit der Wand (20a) eine Formschlussausnehmung (38a) zur Anlage des Formschlusselements (16a) der Adaptereinheit (14a) bildet.

10. Wischblattvorrichtung nach Anspruch 9, **dadurch gekennzeichnet, dass** das Rastelement (22a) an einer der Formschlussausnehmung (38a) gegenüberliegenden Seite des Aufnahmebereichs (36a) angeordnet ist.

11. Wischblattvorrichtung zumindest nach Anspruch 9, **dadurch gekennzeichnet, dass** das Rastelement (22a) an einer Seite des Aufnahmebereichs (36a) angeordnet ist, die von einer die Formschlussausnehmung (38a) aufweisenden und der der Formschlussausnehmung (38a) gegenüberliegenden Seite verschieden ist.

12. Wischblatt mit einer Wischblattvorrichtung (10a) nach zumindest einem der vorherigen Ansprüche.

13. Scheibenwischer mit zumindest einem Wischblatt (42a) nach Anspruch 12 und mit einem Wischarm.

14. Verfahren zur Montage einer Wischblattvorrichtung (10a) nach einem der Ansprüche 1-11, **dadurch gekennzeichnet, dass** in einem Verfahrensschritt ein Formschlusselement (16a) der Adaptereinheit (14a) in eine Formschlussausnehmung (38a) der Basiseinheit (12a) eingesetzt wird und in einem weiteren Verfahrensschritt die Adaptereinheit (14a) mittels einer Rastverbindung formschlüssig an der Basiseinheit (12a) fixiert wird.

## Claims

1. Wiper blade device having a basic unit (12a) and an adapter unit (14a) which is connectable to a wiper arm and, in at least one mounted state, is fixed to the basic unit (12a) in a form-fitting manner, wherein, in the mounted state, the basic unit (12a) and the adapter unit (14a) have a form-fitting connection in which at least one of the units at least partially encompasses in a form-fitting manner around the other of the units, and wherein the basic unit (12a) has at least one latching element (22a) which is provided for fixing the adapter unit (14a) by means of a latching connection, wherein the latching element (22a) is formed by a latching hook (24), **characterized in that** the latching hook (24) is mounted rotatably, wherein the latching hook (24) is held in a closed state by means of an elastic element (26).

2. Wiper blade device according to Claim 1, **characterized in that** the adapter unit (14a) has at least one form-fitting element (16a) which, in the mounted state, is at least partially encompassed by the basic unit (12a).

3. Wiper blade device according to Claim 2, **characterized in that** the form-fitting element (16a) of the adapter unit (14a) is at least partially rounded.

4. Wiper blade device according to one of the preceding claims, **characterized in that** the adapter unit (14a) has at least one rounded pin (28) which is provided for contact of the latching element (22a).

5. Wiper blade device according to one of the preceding claims, **characterized in that** the latching element (22a) is elastically deformable.

6. Wiper blade device at least according to Claim 1, **characterized by** at least one orientation element (32a).

7. Wiper blade device at least according to Claim 6, **characterized in that** the orientation element (32a) is in the form of a form-fitting element (16a) of the basic unit (12a) and/or of the adapter unit (14a).

8. Wiper blade device at least according to Claim 1, **characterized in that** the basic unit (12a) has a receiving region (36a-b, 36d-f) for the adapter unit (14a), said receiving region being bounded by at least one wall (20a).

9. Wiper blade device at least according to Claims 2 and 8, **characterized in that** at least one projection (18a) is arranged on at least one wall (20a) bounding the receiving region (36a), said projection together with the wall (20a) forming a form-fitting recess (38) for contact of the form-fitting element (16a) of the adapter unit (14a).

10. Wiper blade device according to Claim 9, **characterized in that** the latching element (22a) is arranged on a side of the receiving region (36a) opposite the form-fitting recess (38).

11. Wiper blade device at least according to Claim 9, **characterized in that** the latching element (22a) is arranged on a side of the receiving region (36a) that differs from a side which has the form-fitting recess (38a) and the side which is opposite the form-fitting recess (38a).

12. Wiper blade having a wiper blade device (10a) according to at least one of the preceding claims.

13. Wiper having at least one wiper blade (42a) according to Claim 12 and having a wiper arm.

14. Method for installing a wiper blade device (10a) according to one of Claims 1-11,
**characterized in that,** in one method step, a form-fitting element (16a) of the adapter unit (14a) is inserted into a form-fitting recess (38a) of the basic unit (12a) and, in a further method step, the adapter unit (14a) is fixed in a form-fitting manner to the basic unit (12a) by means of a latching connection.

## Revendications

1. Dispositif de balai d'essuie-glace comportant une unité de base (12a) et une unité d'adaptateur (14a) pouvant être connectée à un bras d'essuie-glace, laquelle est fixée, dans au moins un état monté, par engagement par complémentarité de forme à l'unité de base (12a), l'unité de base (12a) et l'unité d'adaptateur (14a) comprenant une connexion par complémentarité de forme dans l'état monté, connexion dans laquelle au moins l'une des unités s'engage au moins partiellement par complémentarité de forme autour de l'autre des unités, et l'unité de base (12a) comprenant au moins un élément d'encliquetage (22a), qui est prévu pour fixer l'unité d'adaptateur (14a) au moyen d'une connexion par encliquetage, l'élément d'encliquetage (22a) étant formé par un crochet d'encliquetage (24), **caractérisé en ce que** le crochet d'encliquetage (24) est monté rotatif, le crochet d'encliquetage (24) étant maintenu dans un état fermé par un élément élastique (26).

2. Dispositif de balai d'essuie-glace selon la revendication 1, **caractérisé en ce que** l'unité d'adaptateur (14a) comprend au moins un élément d'engagement par complémentarité de forme (16a), autour duquel l'unité de base (12a) s'engage au moins partiellement dans l'état monté.

3. Dispositif de balai d'essuie-glace selon la revendication 2, **caractérisé en ce que** l'élément d'engagement par complémentarité de forme (16a) de l'unité d'adaptateur (14a) est configuré de manière au moins partiellement arrondie.

4. Dispositif de balai d'essuie-glace selon l'une des revendications précédentes, **caractérisé en ce que** l'unité d'adaptateur (14a) comprend au moins une broche arrondie (28), qui est prévue pour l'appui de l'élément d'encliquetage (22a).

5. Dispositif de balai d'essuie-glace selon l'une des revendications précédentes, **caractérisé en ce que** l'élément d'encliquetage (22a) est réalisé de manière déformable élastiquement.

6. Dispositif de balai d'essuie-glace au moins selon la revendication 1, **caractérisé par** au moins un élément d'orientation (32a).

7. Dispositif de balai d'essuie-glace au moins selon la revendication 6, **caractérisé en ce que** l'élément d'orientation (32a) est réalisé comme élément d'engagement par complémentarité de forme (16a) de l'unité de base (12a) et/ou de l'unité d'adaptateur (14a).

8. Dispositif de balai d'essuie-glace au moins selon la revendication 1, **caractérisé en ce que** l'unité de base (12a) comprend une région de réception (36a-b, 36d-f), limitée par au moins une paroi (20a), pour l'unité d'adaptateur (14a).

9. Dispositif de balai d'essuie-glace au moins selon les revendications 2 et 8, **caractérisé en ce qu'**au moins une saillie (18a) est disposée sur au moins une paroi (20a) limitant la région de réception (36a), laquelle saillie forme avec la paroi (20a) un évidement d'engagement par complémentarité de forme (38a) pour l'appui de l'élément d'engagement par complémentarité de forme (16a) de l'unité d'adaptateur (14a).

10. Dispositif de balai d'essuie-glace selon la revendication 9, **caractérisé en ce que** l'élément d'encliquetage (22a) est disposé sur un côté de la région de réception (36a) opposé à l'évidement d'engagement par complémentarité de forme (38a).

11. Dispositif de de balai d'essuie-glace 9, **caractérisé en ce que** l'élément d'encliquetage (22a) est disposé sur un côté de la région de réception (36a) qui est différent d'un côté comprenant l'évidement d'engagement par complémentarité de forme (38a) et du côté opposé à l'évidement d'engagement par complémentarité de forme (38a).

12. Balai d'essuie-glace comportant un dispositif de balai d'essuie-glace (10a) selon au moins l'une des revendications précédentes.

13. Essuie-glace comportant au moins un balai d'essuie-glace (42a) selon la revendication 12 et comportant un bras d'essuie-glace.

14. Procédé de montage d'un dispositif de balai d'essuie-glace (10a) selon l'une des revendications 1 à 11,
**caractérisé en ce que** dans une étape de procédé un élément d'engagement par complémentarité de forme (16a) de l'unité d'adaptateur (14a) est inséré dans un évidement d'engagement par complémentarité de forme (38a) de l'unité de base (12a) et dans une autre étape de procédé l'unité d'adaptateur (14a) est fixée à la partie de base (12a) par complémentarité de forme au moyen d'une connexion par encliquetage.
